# EUROPÄISCHE PATENTSCHRIFT

(11) **EP 4 334 156 B1**
(45) Veröffentlichungstag und Bekanntmachung des Hinweises auf die Patenterteilung: **18.03.2026**
(21) Anmeldenummer: 22727844.7
(22) Anmeldetag: 04.05.2022
(51) Int. Cl.: B60K 35/00, G02F 1/13, G02F 1/1347, G02F 1/1335, B60K 35/29, B60K 35/28, B60K 35/22, B60K 35/10

(54) **KRAFTFAHRZEUG MIT EINER ANZEIGEVORRICHTUNG UND VERFAHREN ZUM AKTIVIEREN EINER BLICKSCHUTZEINRICHTUNG**
MOTOR VEHICLE HAVING A DISPLAY APPARATUS, AND METHOD FOR ACTIVATING A VIEW PROTECTION DEVICE
VÉHICULE À MOTEUR ÉQUIPÉ D'UN DISPOSITIF D'AFFICHAGE ET PROCÉDÉ POUR ACTIVER UN DISPOSITIF DE PROTECTION CONTRE LES REGARDS

(30) Priorität: 05.05.2021 DE 102021111624
(43) Veröffentlichungstag der Anmeldung: 13.03.2024
(73) Patentinhaber: Audi AG, 85045 Ingolstadt (DE)
(72) Erfinder: MOLL, Tobias, 85055 Ingolstadt (DE); MÜLLER, Ulrich, 85055 Ingolstadt (DE); SAGER, Roland, 86697 Oberhausen (DE)
(74) Vertreter: Hofstetter, Schurack & Partner
(86) Internationale Anmeldenummer: PCT/EP2022/062043
(87) Internationale Veröffentlichungsnummer: WO 2022/233970

(56) Entgegenhaltungen:
- DE-A1- 102013 213 600
- FR-A3- 3 016 722
- GB-A- 2 418 518
- US-A1- 2020 249 504
- US-A1- 2020 319 512

## Beschreibung

Die Erfindung betrifft ein Kraftfahrzeug mit einer Anzeigevorrichtung sowie ein Verfahren zum Aktivieren einer Blickschutzeinrichtung.

Bildschirme mit einer Blickschutzeinrichtung, zum Beispiel einer Shutterfolie oder einem elektronisch zuschaltbaren Filter, bei denen nur eine Anzeige von einer Blickrichtung senkrecht zum Bildschirm ermöglich wird und seitliche Blickrichtungen blockiert werden, sind bekannt. So ist der Bildinhalt nicht oder sehr stark abgedunkelt zu sehen, wenn man von der Seite auf das Display schaut. Hierfür gibt es unterschiedliche Technologien, welche diesen Effekt schaltbar ausführen.

Beispielsweise ist aus der DE 10 2007 001 142 A1 eine Anzeigevorrichtung für ein Fahrzeug bekannt, das eine Anzeige-LCD und eine Steuer-LCD aufweist. Die Steuer-LCD weist Transmissionsschaltabschnitte mit jeweils drei Segmenteinheiten auf. Wenn das Fahrzeug fährt, werden linke zwei Drittel der Segmenteinheiten jedes Transmissionsschaltabschnitts in einem Abschnitt der Steuer-LCD, welcher der linken Bildschmirmhälfte der Anzeige-LCD entspricht, in einen nicht transparenten Zustand gesetzt. In einem Abschnitt der Steuer-LCD, welcher der rechten Bildschirmhälfe der Anzeige-LCD entspricht, werden demgegenüber alle Segmenteinheiten in einen transparenten Zustand gesetzt. Folglich ist ein Bild in der rechten Bildschirmhälfte vom Fahrersitz aus sichtbar, während ein Bild in der linken Bildschirmhälfe vom Fahrersitz aus unsichtbar ist. Beide Bilder in der rechten und linken Bildschirmhälfte sind von einem Beifahrersitz aus sichtbar.

Aus der US 2021/0063783 A1 ist ein elektronischer Apparat zur Steuerung eines Beifahrerisitzdisplays vor einem Passagier, der auf einem Beifahrersitz sitzt, und ein Verfahren zum Steuern des Beifahrersitzdisplays bekannt.

Aus der DE 10 2018 111 344 A1 ist eine Multifunktionseinrichtung für ein Fahrzeug bekannt. Die Multifunktionseinrichtung umfasst zumindest eine Displayeinrichtung und zumindest ein Funktionselement, wobei das Funktionselement zumindest bereichsweise bezüglich einer Anzeigerichtung der Displayeinrichtung derartig von der Displayeinrichtung angeordnet ist, dass das Funktionselement zumindest in einem ersten Betrieb der Displayeinrichtung entlang einer normalen Richtung der Displayeinrichtung zumindest bereichsweise die Displayeinrichtung überdeckt, sowie ein Armaturenbrett mit einer solchen Multifunktionseinrichtung.

Aus der US 2020/0319512 A1 ist eine Anzeige mit lokal dimmbarer Hintergrundbeleuchtung und aktiven Sichtschutzmodus bekannt. Die Anzeige kann eine Hintergrundlichtquelle, Linsen, einen passiven Diffusor, einen aktiven Diffusor und eine durchlässige Anzeige umfassen. Die Hintergrundlichtquelle kann eine zweidimensionale Matrix von Lichtquellen aufweisen, die so beschaffen sind, dass sie ein Ausgangslicht erzeugen. Die Linsen können angrenzend an die Hintergrundbeleuchtung angebracht, auf die Hintergrundbeleuchtung ausgerichtet und so angeordnet sein, dass sie ein kollimiertes Licht erzeugen. Der passive Diffusor kann angrenzend an den Linsen angebracht und so konfiguriert sein, dass er das kollimierte Licht räumlich verteilt. Der aktive Diffusor kann angrenzend an den passiven Diffusor angebracht und so beschaffen sein, dass er aus dem kollimierten Licht ein Zwischenlicht erzeugt und als Antwort auf ein Streusignal eine Diffusionseigenschaft des Zwischenlichts ändert. Die durchlässige Anzeige kann angrenzend an den aktiven Diffusor angebracht und so eingerichtet sein, dass sie durch Modulation des Zwischenlichts mehrere sichtbare Bilder durch Modulation des Zwischenlichts erzeugt.

Aus der US 2020/0249504 A1 ist ein schaltbares Hintergrundbeleuchtungssystem mit Sichtschutz bekannt. Das Hintergrundbeleuchtungssystem umfasst eine erste Hintergrundbeleuchtungseinheit, die Licht von einer Nicht-Betrachtungsseite des Hintergrundbeleuchtungssystems in Richtung einer Betrachtungsseite des Hintergrundbeleuchtungssystems emittiert; eine zweite Hintergrundbeleuchtungseinheit, die sich auf einer Betrachtungsseite der ersten Hintergrundbeleuchtungseinheit befindet und Licht in Richtung der Betrachtungsseite des Hintergrundbeleuchtungssystems emittiert; und eine Sichtschutzoptik, die ein Flüssigkristallmaterial umfasst und sich auf einer Nicht-Betrachtungsseite der zweiten Hintergrundbeleuchtungseinheit und zwischen der ersten Hintergrundbeleuchtungseinheit und der zweiten Hintergrundbeleuchtungseinheit befindet, wobei die Sichtschutzoptik so arbeitet, dass sie Licht von der ersten Hintergrundbeleuchtungseinheit in einem begrenzten Betrachtungswinkelbereich überträgt.

Aus der FR 3 016 722 A3 ist ein Kraftfahrzeug mit einem Anzeigebildschirm bekannt, der einen elektronischen privacy-Filter aufweist. Es ist ein Kraftfahrzeug mit einem Armaturenbrett vorgesehen, das mit einem Anzeigebildschirm ausgestattet ist, vor dem ein Beifahrersitz angeordnet ist. Der Anzeigebildschirm umfasst einen Filter, der geeignet ist, das Sichtfeld des Anzeigebildschirms zu verändern, wenn er zwischen einem inaktiven Zustand, in dem das Sichtfeld in einem weiten Sichtwinkel geöffnet ist, der eine leitende Position umfasst, und einem aktiven Zustand, in dem das Sichtfeld in einem eingeschränkten Sichtwinkel geschlossen ist, der die leitende Position ausschließt, gesteuert wird.

Aus der DE 10 2013 213 600 A1 ist ein Verfahren zum Steuern einer Informationsanzeige in einem Fahrzeug bekannt, bei dem mittels einer Anzeigevorrichtung Informationen angezeigt werden und die Lichtdurchlässigkeit einer Scheibe, die in einer Betrachtungsrichtung von einer Position im Innenraum des Fahrzeugs auf die Anzeigevorrichtung vor der Anzeigevorrichtung angeordnet ist, in Abhängigkeit von einem Fahrzustand des Fahrzeugs gesteuert wird.

Nachteilig bei bekannten Anzeigevorrichtungen ist es, dass der zu blockierende Bereich für den "privacy Modus" immer fest definiert ist, insbesondere über einen gesamten Bildschirm, und somit immer der gesamte Bildschirm für den Fahrer abgedunkelt wird.

Der Erfindung liegt die Aufgabe zugrunde, ein Kraftfahrzeug mit einer verbesserten Anzeigevorrichtung bereitzustellen.

Diese Aufgabe wird durch die unabhängigen Patentansprüche gelöst. Vorteilhafte Weiterbildungen der Erfindung sind in den abhängigen Patentansprüchen, der folgenden Beschreibung sowie den Figuren offenbart.

Die Erfindung basiert auf der Erkenntnis, dass auf einem Bildschirm einer Anzeigevorrichtung nur diejenigen Anzeigen für den Fahrer ausgeblendet werden sollen, die ihn von einer Fahraufgabe ablenken. Damit der Bildschirm nicht unnötig eingeschränkt wird, ist vorgesehen, eine segmentweise variable Ansteuerung der Bereiche des Bildschirms bereitszustellen, die für den Fahrer aktiviert beziehungsweise deaktiviert werden können.

Durch die Erfindung ist ein Kraftfahrzeug mit einer Anzeigevorrichtung bereitgestellt, die an einem Armaturenbrett des Kraftfahrzeugs angeordnet ist, wobei die Anzeigevorrichtung einen Flüssigkristallbildschirm aufweist, der zumindest einer Beifahrerposition zugeordnet ist, wobei der Flüssigkristallbildschirm in eine Mehrzahl von Segmenten unterteilt ist, wobei ein jeweiliges Segment eine elektronisch schaltbare Blickschutzeinrichtung aufweist, die dazu ausgebildet ist, in einem aktivierten Zustand eine Anzeige eines Anzeigebilds der jeweiligen Segmente aus Blickrichtung einer Fahrerposition zu blockieren und die Anzeige aus Blickrichtung der Beifahrerposition zuzulassen, und in einem deaktivierten Zustand die Anzeige aus beiden Blickrichtungen zuzulassen, wobei die Anzeigevorrichtung dazu ausgebildet ist, die Segmente zu bestimmen, auf denen eine bewegte Unterhaltungsanzeige angezeigt wird, und für diese Segmente die Blickschutzeinrichtung zu aktivieren.

Mit anderen Worten umfasst das Kraftfahrzeug eine Anzeigevorrichtung, die einen Flüssigkristallbildschirm ("liquid crystal display; LCD) aufweist. Der Flüssigkristallbildschirm umfasst üblicherweise eine Hintergrundbeleuchtung, die diffuses Licht erzeugt, und eine Flüssigkristallanzeigeschicht, die über eine Polarisationssteuerung des Lichts einzelne Pixel für eine Anzeige aktivieren beziehungsweise deaktivieren kann. Die Anzeigevorrichtung mit dem Flüssigkristallbildschirm ist vorzugsweise der Beifahrerposition zugeordnet, was bedeutet, dass der Flüssigkristallbildschirm im Wesentlichen vor der Beifahrerposition angeordnet ist. So kann beispielsweise zumindest 60 Prozent der Bildschirmoberfläche direkt vor der Beifahrerposition angeordnet sein.

Vorzugsweise kann der Flüssigkristallbildschirm in mehrere Segmente unterteilt sein, wobei mit Segmenten elektronisch ansteuerbare Bereiche des Flüssigkristallbildschirms gemeint sein können. Jedes dieser Segmente kann eine elektronisch schaltbare Blickschutzeinrichtung umfassen, durch die eine Anzeige aus Blickrichtung der Fahrerposition blockiert werden kann. Das heißt, der Fahrer kann bei aktivierter Blickschutzeinrichtung in dem jeweiligen Segment nur ein abgedunkeltes Bild sehen beziehungsweise kein Bild. Dies kann insbesondere durch eine Richtungssteuerung des Lichts aus dem Flüssigkristallbildschirm erreicht werden. Die Blickschutzeinrichtung ist vorzugsweise elektronisch schaltbar, was bedeutet, dass diese aktiviert und deaktiviert werden kann. So kann im deaktivierten Zustand der Blickschutzeinrichtung auch aus Blickrichtung einer Fahrerposition ein Anzeigebild wahrgenommen werden.

Da nicht alle Anzeigebilder für einen Fahrer des Kraftfahrzeugs ausgeblendet werden sollen, ist vorgesehen, dass die Anzeigevorrichtung ermitteln kann, welche Segmente eine bewegte Unterhaltungsanzeige anzeigen. Mit einer Unterhaltungsanzeige ist beispielsweise ein Film oder ein Spiel gemeint, dass auf der Anzeigevorrichtung für einen Beifahrer angezeigt werden kann. Insbesondere bewegte Unterhaltungsanzeigen können eine Verkehrsicherheit gefährden, da diese einen Fahrer von der Straße ablenken können.

Vorzugsweise ist der gesamte Flüssigkristallbildschirm in die Segmente unterteilt. Das bedeutet, dass nicht nur einzelne Bereiche des Flüssigkristallbildschirms die Segmente aufweisen. So kann beispielsweise jeder Pixel des Flüssigkristallbildschirms durch die Blickschutzeinrichtung ansteuerbar sein. Des Weiteren kann der Flüssigkristallbildschirm bevorzugt über das gesamte Armaturenbrett ausgebildet sein.

Die Blickschutzeinrichtung kann vorzugsweise mittels eines schaltbaren Kollimators bereitgestellt werden, der Licht aus dem Flüssigkristallbildschirm parallelisieren kann und somit nur eine Anzeige aus einer vorgegebenen Richtung abstrahlt. Hierzu können zum Beispiel Anordnungen mehrerer Schichten von Flüssigkristallen vorgesehen sein oder es kann eine Hintergrundbeleuchtung des Flüssigkristallbildschirms derart ausgebildet sein, dass diese parallelisiertes Licht abstrahlt.

Durch die Erfindung ergibt sich der Vorteil, dass nicht der gesamte Flüssigkristallbildschirm für den Fahrer schwarz geschaltet werden muss und beispielsweise alle nicht bewegten Inhalte, wie zum Beispiel Statuszeilen, Bedienelemente, eine Uhrzeit, Informationen und/oder eine Navigationsanzeige sowohl von Beifahrer als auch vom Fahrer gesehen werden können. Damit bleibt der optische Gesamteindruck der Anzeigevorrichtung besser erhalten und große schwarze Flächen können vermieden werden. Des Weiteren kann eine Sicherheit erhöht werden, da keine bewegten Unterhaltungsanzeigen für den Fahrer angezeigt werden.

Des Weiteren ist erfindungsgemäß vorgesehen, dass der Flüssigkristallbildschirm zusätzlich zu einer Flüssigkristallanzeigeschicht zumindest eine Flüssigkristallzellenschicht, die als eine TN-Zellenschicht ("twisted nematic" Zellenschicht) ausgebildet ist als Blickschutzeinrichtung aufweist, die segmentweise ansteuerbar ist und die dazu ausgebildet ist, bei angelegter Spannung Lichtstrahlen in Blickrichtung der Beifahrerposition zu kollimieren. Mit anderen Worten kann der Flüssigkristallbildschirm eine Flüssigkristallanzeigeschicht aufweisen, die zur Bildsteuerung des Flüssigkristallbildschirms dient. Die Flüssigkristallanzeigeschicht ist Stand der Technik und in jedem Flüssigkristallbildschirm enthalten. Zusätzlich zu dieser Flüssigkristallanzeigeschicht weist der Flüssigkristallbildschirm als Blickschutzeinrichtung eine Flüssigkristallzellenschicht auf, die nach dem gleichen Prinzip wie die Flüssigkristallanzeigeschicht aufgebaut sein kann. Insbesondere kann diese zusätzliche Flüssigkristallschicht eine TN-Zellenschicht (twisted nematic) sein. Hierbei können zwei Polarisationsfilter, die mit ihrer Polarisationsrichtung um 90 Grad zueinander versetzt sind eine Schicht von Flüssigkristallmolekülen umschließen, wobei die Flüssigkristallmoleküle die Polarisationsrichtung des Lichts in Abhängigkeit von einer an die Flüssigkristallmoleküle angelegter Spannung drehen kann. Somit kann eine Durchlässigkeit des Lichts beider Polarisatoren gesteuert werden.

Ein zusätzlicher, Effekt der Flüssigkristallzellenschicht ist, dass in Abhängigkeit der angelegten Spannung eine Abstrahlrichtung von Licht, das die Flüssigkristallzellenschicht passiert, gesteuert werden kann. Das heißt, dass bei einem herkömmlichen LCD-Bildschirm Randstrahlen im Vergleich zu senkrechten Strahlen abgeschwächt sind und bei der Anordnung weiterer Flüssigkristallzellenschichten, dieser Effekt noch weiter verstärkt werden kann. Es kann also eine Asymmetrie erzeugt werden, so dass Strahlen in Richtung der Fahrerposition minimiert werden.

Erfindungsgemäß ist zur Erzeugung der Blickschutzfunktion vorgesehen, dass die Flüssigkristallzellenschicht so geschalten wird, dass eine gitterförmige Struktur in der Flüssigkristallzellenschicht entsteht. Mit anderen Worten ist die Flüssigkristallzellenschicht, die als eine TN-Zellenschicht ausgebildet ist, eine für Licht undurchsichtige Schicht mit einzelnen durchsichtig geschalteten Löchern in der TN-Zellenschicht, wobei durch die Löcher nur parallele Strahlen hindurchtreten und seitliche Strahlen größtenteils herausgefiltert werden. Hierdurch ergibt sich der Vorteil, dass hauptsächlich senkrechte Strahlen erzeugt werden und seitliche Strahlen, insbesondere in Blickrichtung der Fahrerposition, blockiert werden.

Die Erfindung umfasst auch Ausführungsformen, durch die sich zusätzliche Vorteile ergeben.

In einer Ausführungsform ist vorgesehen, dass die zumindest eine Flüssigkristallzellenschicht zwischen einer Hintergrundbeleuchtung des Flüssigkristallbildschirms und der Flüssigkristallanzeigeschicht des Flüssigkristallbildschirms oder an einer Oberfläche des Flüssigkristallbildschirms angeordnet ist. Durch diese Anordnungen kann eine besonders bevorzugte Richtungssteuerung des Lichts erzeugt werden.

Besonders bevorzugt ist vorgesehen, dass mehrere hintereinander angeordnete und zueinander ausgerichtete Flüssigkristallzellenschichten als jeweilige Blickschutzeinrichtung bereitgestellt sind. Vorzugsweise können zwei oder drei dieser Flüssigkristallzellenschichten hintereinander angeordnet sein, sodass die Randstrahlen in Blickrichtung der Fahrerposition zu mindestens 90 Prozent, vorzugsweise mindestens 95 Prozent, herausgefiltert werden. Durch diese Ausführungsform ergibt sich der Vorteil, dass eine elektrisch steuerbare und platzsparende Blickschutzeinrichtung bereitgestellt werden kann, die segmentweise ansteuerbar ist.

In einer nicht beanspruchten Alternative ist vorgesehen, dass eine Hintergrundbeleuchtung des Flüssigkristallbildschirms zur Bereitstellung der Blickschutzeinrichtung zweischichtig ausgebildet ist, wobei eine erste Hintergrundbeleuchtungsschicht dazu ausgebildet ist, Licht diffus abzustrahlen, und wobei eine zweite Hintergrundbeleuchtungsschicht dazu ausgebildet ist, Licht kollimiert in Blickrichtung der Beifahrerposition abzustahlen, wobei die beiden Hintergrundbeleuchtungsschichten dazu ausgebildet sind, die jeweiligen Segmente separat zu beleuchten, wobei in dem aktivierten Zustand der Blickschutzeinrichtung nur die zweite Hintergrundbeleuchtungsschicht in dem jeweiligen Segment Licht abstrahlt und die erste Hintergrundbeleuchtungsschicht in diesem Segment deaktiviert ist. In einem deaktivierten Zustand der Blickschutzeinrichtung kann vorzugsweise nur die erste Hintergrundbeleuchtungsschicht Licht abstrahlen und die zweite Hintergrundbeleuchtungsschicht ist deaktiviert. Das bedeutet, dass die Hintergrundbeleuchtung des Flüssigkristallbildschirms zumindest zwei Arten von Licht abstrahlen kann, indem zwei Hintergrundbeleuchtungsschichten bereitgestellt sind.

Die erste Hintergrundbeleuchtungsschicht strahlt diffuses Licht ab, wie es in einem Normalbetrieb eines LCD-Bildschirms vorgesehen ist. Hierzu können beispielsweise Leuchtdioden als Hintergrundbeleuchtungsschicht bereitgestellt sein. Die zweite Hintergrundbeleuchtungsschicht kann Licht abstrahlen, das in Blickrichtung der Beifahrerposition kollimiert ist. Das heißt, dass im Wesentlichen paralleles Licht in Richtung der Beifahrerposition abgestrahlt wird. Somit wird nur wenig oder kein Licht der zweiten Hintergrundbeleuchtungsschicht zu der Fahrerposition abgestrahlt, wodurch eine Anzeige für einen Fahrer blockiert werden kann. Die jeweiligen Hintergrundbeleuchtungsschichten sind vorzugsweise dazu ausgebildet, die jeweiligen Segmente des Flüssigkristallbildschirms separat und wechselweise zu beleuchten. Das heißt, dass in einem Segment in dem die erste Hintergrundbeleuchtungsschicht aktiviert ist die zweite Hintergrundbeleuchtungsschicht deaktiviert ist und umgekehrt. So kann für jedes Segment die Blickschutzeinrichtung aktiviert werden, indem nur die zweite Hintergrundbeleuchtungschicht für das jeweilige Segment Licht abstrahlt.

Vorzugsweise ist vorgesehen, dass die zweite Hintergrundbeleuchtungsschicht zumindest eine Kollimatorvorrichtung aufweist. Das heißt, dass zur Bereitstellung einer vorgegebenen Lichtrichtung zumindest eine Kollimatorvorrichtung bereitgestellt sein kann. Als Kollimatorvorrichtung kann beispielsweise eine Lichtquellle, insbesondere eine LED, in einem Fokuspunkt oder einer Fokusebene einer Sammellinse bereitgestellt seien, wodurch die Lichtstrahlen parallelisiert werden. Zusätzlich oder alternativ kann eine Lochblende oder ein Gitter bereitgestellt sein, wodurch eine Richtung des Lichts vorgegeben werden kann. Auch eine Lichtlenkung über Mikroprismen oder andere optische Strukturen kann als Kollimatorvorrichtung bereitgestellt sein. Vorzugsweise kann die Kollimatorvorrichtung einen Kondensor aufweisen, der Lichtstrahlen sammeln und der Kollimatorvorrichtung bereitstellen kann, um eine Intensität des Lichtsignals zu erhöhen. Durch diese Ausführungsform ergibt sich der Vorteil, dass eine Lichtlenkung direkt an der Hintergrundbeleuchtung durchgeführt werden kann, wodurch eine höhere Lichtintensität für die Blickschutzeinrichtung erhalten werden kann.

In einer weiteren Ausführungsform ist vorgesehen, dass die Segmente als waagerechte und/oder senkrechte Streifen ausgebildet sind. Mit anderen Worten können die Segmente von einer Seite des Bildschirms zur anderen Seite des Bildschirms ausgebildet sein und übereinander und/oder nebeneinander den gesamten Bereich des Bildschirms abdecken. Durch diese Ausführungsform ergibt sich der Vorteil, dass eine Steuerung der Segmente und damit der Blickschutzeinrichtungen in einem Rand des Bildschirms untergebracht sein kann und somit eine Steuerung der Blickschutzeinrichtung vereinfacht wird.

In einer weiteren vorteilhaften Ausführungsform ist vorgesehen, dass die Segmente als Rechtecke und/oder Rauten ausgebildet sind. Das heißt, dass einzelne rechteckige Bereiche im Bildschirm ansteuerbar sind, die nicht am Rand liegen müssen, sonder innerhalb des Bildschirms angeordnet sein können. Vorzugsweise kann jeder Pixel des Flüssigkristallbildschirms ein rechteckiges Segment darstellen. So kann besonders genau insbesondere für jeden Pixel, gesteuert werden, ob dieser aus Richtung der Fahrerposition sichtbar sein soll oder nicht.

Eine weitere Ausführungsform sieht vor, dass die Anzeigevorrichtung dazu ausgebildet ist, zu bestimmen, ob das Kraftfahrzeug sich bewegt oder steht und/oder ob das Kraftfahrzeug manuell oder autonom betrieben wird, und die Blickschutzeinrichtung zu aktivieren, falls das Kraftfahrzeug sich bewegt und/oder manuell betrieben wird, und die Blickschutzeinrichtung zu deaktivieren, falls das Kraftfahrzeug steht und/oder autonom betrieben wird. Mit anderen Worten kann die Anzeigevorrichtung prüfen und unterscheiden, ob sich das Kraftfahrzeug bewegt oder nicht und/oder ob das Kraftfahrzeug manuell betrieben wird oder autonom. Da die Blickschutzeinrichtung vorzugsweise dazu vorgesehen ist, eine Fahrsicherheit für einen Fahrer zu erhöhen, kann die Blickschutzeinrichtung dann aktiviert werden, falls sich das Kraftfahrzeug bewegt und der Fahrer das Kraftfahrzeug manuell fährt. Befindet sich das Kraftfahrzeug im Stand kann die Blickschutzeinrichtung für die bewegten Unterhaltungsanzeigen freigegeben sein. Auch in einem autonomen Fahrbetrieb des Kraftfahrzeugs können die bewegten Unterhaltungsanzeigen durch die Blickschutzeinrichtung freigegeben sein, sodass der Fahrer und ein Beifahrer zusammen eine bewegte Unterhaltungsanzeige, wie beispielsweise einen Film ansehen können. Durch diese Ausführungsform ergibt sich der Vorteil, dass eine Sicherheit verbessert werden kann.

Ein weiterer Aspekt der Erfindung betrifft ein Verfahren zum Aktivieren einer Blickschutzeinrichtung mit einem Kraftfahrzeug nach einem der vorhergehenden Ausführungsformen. Das Verfahren umfasst als Schritte ein Bestimmen, ob das Kraftfahrzeug in einem manuellen Fahrbetrieb gefahren wird, ein Bestimmen von Segmenten der Anzeigevorrichtung, auf denen eine bewegte Unterhaltungsanzeige angezeigt wird und ein Aktivieren der Blickschutzeinrichtung in den Segmenten, in denen die bewegte Unterhaltungsanzeige angezeigt wird, falls das Kraftfahrzeug in dem manuellen Fahrbetrieb gefahren wird. Hierbei ergeben sich gleiche Vorteile und Variationsmöglichkeiten wie bei dem Kraftfahrzeug.

Zu der Erfindung gehört auch die Steuervorrichtung für das Kraftfahrzeug. Die Steuervorrichtung kann eine Datenverarbeitungsvorrichtung oder eine Prozessoreinrichtung aufweisen, die dazu eingerichtet ist, eine Ausführungsform des erfindungsgemäßen Verfahrens durchzuführen. Die Prozessoreinrichtung kann hierzu zumindest einen Mikroprozessor und/oder zumindest einen Mikrocontroller und/oder zumindest einen FPGA (Field Programmable Gate Array) und/oder zumindest einen DSP (Digital Signal Processor) aufweisen. Des Weiteren kann die Prozessoreinrichtung Programmcode aufweisen, der dazu eingerichtet ist, bei Ausführen durch die Prozessoreinrichtung die Ausführungsform des erfindungsgemäßen Verfahrens durchzuführen. Der Programmcode kann in einem Datenspeicher der Prozessoreinrichtung gespeichert sein.

Zu der Erfindung gehören auch Weiterbildungen des erfindungsgemäßen Verfahrens, die Merkmale aufweisen, wie sie bereits im Zusammenhang mit den Weiterbildungen des erfindungsgemäßen Kraftfahrzeugs beschrieben worden sind. Aus diesem Grund sind die entsprechenden Weiterbildungen des erfindungsgemäßen Verfahrens hier nicht noch einmal beschrieben.

Das erfindungsgemäße Kraftfahrzeug ist bevorzugt als Kraftwagen, insbesondere als Personenkraftwagen oder Lastkraftwagen, oder als Personenbus oder Motorrad ausgestaltet.

Die Erfindung umfasst auch die Kombinationen der Merkmale der beschriebenen Ausführungsformen. Die Erfindung umfasst also auch Realisierungen, die jeweils eine Kombination der Merkmale mehrerer der beschriebenen Ausführungsformen aufweisen, sofern die Ausführungsformen nicht als sich gegenseitig ausschließend beschrieben wurden.

Im Folgenden sind Ausführungsbeispiele der Erfindung beschrieben. Hierzu zeigt:
- Fig. 1: eine perspektivische Darstellung eines Kraftfahrzeuginnenraums mit einer Anzeigevorrichtung gemäß einer beispielhaften Ausführungsform;
- Fig. 2: eine schematische Darstellung einer Anzeigevorrichtung gemäß einer beispielhaften Ausführungsform;
- Fig. 3: ein schematisches Verfahrensdiagramm gemäß einer beispielhaften Ausführungsform.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

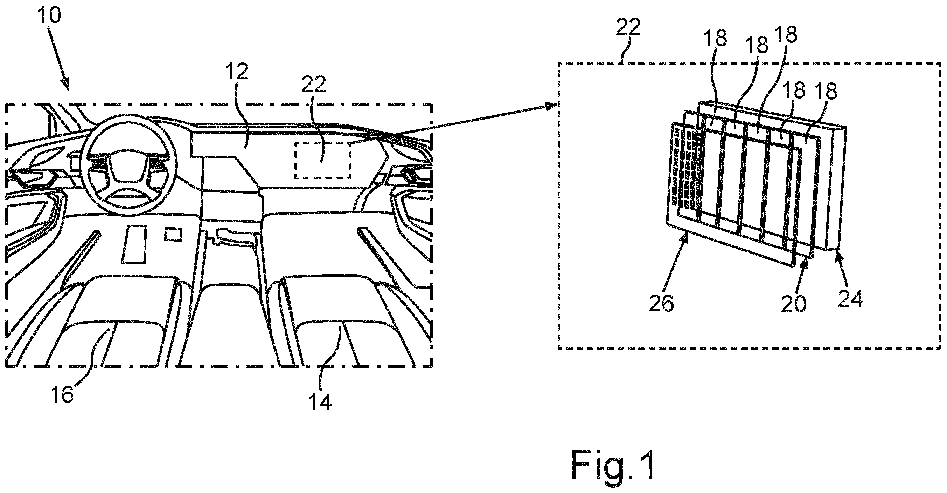

In Fig. 1 ist eine perspektivische Ansicht auf ein Armaturenbrett eines Kraftfahrzeugs 10 mit einer Anzeigevorrichtung 12 gemäß einer beispielhaften Ausführungsform dargestellt. Die Anzeigevorrichtung 12 kann an dem Armaturenbrett des Kraftfahrzeugs 10 angeordnet sein, wobei die Anzeigevorrichtung 12 vorzugsweise als Flüssigkristallbildschirm ausgebildet ist, der einen Großteil des Armaturenbretts abdeckt. Vorzugsweise kann die Anzeigevorrichtung 12 jedoch im Wesentlichen einer Beifahrerposition 14 zugeordnet sein. Das bedeutet, dass eine Fläche des Flüssigkristallbildschirms zu über 70 Prozent vor der Beifahrerposition 14 angeordnet ist.

Nachteilig bei einer so großflächigen Anzeigevorrichtung 12 ist es, dass ein Fahrer auf einer Fahrerposition 16 von Anzeigen der Anzeigevorrichtung 12 abgelenkt werden kann, wodurch eine Verkehrssicherheit des Kraftfahrzeugs 10 gefährdet werden könnte. Insbesondere bewegte Unterhaltungsanzeigen, wie Filme können eine Aufmerksamkeit stark ablenken und sind in vielen Ländern während der Fahrt verboten.

Um eine solche Ablenkung zu verhindern und dennoch einem Beifahrer eine bewegte Unterhaltungsanzeige zu ermöglichen, kann vorgesehen sein, dass der Flüssigkristallbildschirm in mehrere Segmente 18 unterteilt ist und jedes dieser Segmente 18 eine schaltbare Blickschutzeinrichtung 20 aufweist. Die Blickschutzeinrichtung 20 kann vorzugsweise dazu ausgebildet sein, zumindest zwei Zustände anzunehmen, wobei in einem deaktivierten Zustand eine Anzeige auf der Anzeigevorrichtung sowohl von der Fahrerposition 16 als auch von der Beifahrerposition 14 gesehen werden kann und in einem aktivierten Zustand der Blickschutzeinrichtung 20 nur aus Blickrichtung der Beifahrerposition 14. Das bedeutet, dass Lichtstrahlen in Richtung der Fahrerposition 16 im aktivierten Zustand der Blickschutzvorrichtung 20 blockiert werden können.

Dies soll nachfolgend anhand eines Beispiels erklärt werden. Ein Beifahrer auf der Beifahrerposition 14 möchte zum Beispiel einen Film auf der Anzeigevorrichtung 12 abspielen lassen, wobei er hierfür nicht die gesamte Oberfläche des Flüssigkristallbildschirms benötigt. Insbesondere kann eine Fenstergröße zur Anzeige des Films variabel eingestellt werden, so dass beispielsweise der Film auf dem Ausschnitt 22 angezeigt werden soll.

Der Ausschnitt 22 des Flüssigkristallbildschirms ist hierbei zur Erklärung in einer weiteren schematischen Ansicht dargestellt, wobei der gesamte Flüssigkristallbildschirm in gleicher Weise aufgebaut sein kann. Der Flüssigkristallbildschirm kann zumindest eine Hintergrundbeleuchtung 24 und eine Flüssigkristallanzeigeschicht 26 aufweisen. Dabei sind die Hintergrundbeleuchtung 24 und die Flüssigkristallanzeigeschicht 26 übliche Komponenten für einen Flüssigkristallbildschirm. Die Hintergrundbeleuchtung 24 kann dazu ausgebildet sein, ein diffuses Lichtsignal zu erzeugt und die Flüssigkristallanzeigeschicht steuert die Durchlässigkeit der einzelnen Pixel für dieses Licht, um ein Bild zu generieren.

Zwischen der Hintergrundbeleuchtung 24 und der Flüssigkristallanzeigeschicht 26 kann die Blickschutzeinrichtung 20 angeordnet sein, die in diesem Ausführungsbeispiel als zusätzliche Flüssigkristallzellenschicht, insbesondere als eine twisted nematic Zellenschicht (TN-Zellenschicht) ausgebildet sein kann. Diese TN Zellenschicht 20 kann in die mehreren Segmente 18 unterteilt sein, die separat ansteuerbar sind, um die Blickrichtung aus der Fahrerposition 16 zu blockieren. Dabei kann insbesondere der Effekt von Flüssigkristallzellenschichten beziehungsweise Flüssigkristallmolekülen ausgenutzt werden, dass je nach angelegter Spannung eine Polarisations- und Richtungsanpassung des Lichts erfolgt. Bei Durchtritt des Lichts durch die Flüssigkristallzellenschichten, wird eine oder mehrere Richtungen des Lichts abgeschwächt. Bei geeigneter Ansteuerung der Flüssigkeitsmoleküle mit einem Spannungswert, kann somit insbesondere Licht in Blickrichtung der Fahrerposition abgeschwächt werden. Vorzugsweise können mehrere Flüssigkristallzellenschichten 20 hintereinander angeordnet und so ausgerichtet sein, dass das Licht in Richtung der Fahrerposition 16 bei einer vorgegebenen angelegten Spannung auf eine Intensität von unter 1 Prozent reduziert wird.

Vorzugsweise kann der gesamte Flüssigkristallbildschirm der Anzeigevorrichtung 12 wie zuvor beschrieben ausgebildet sein, sodass je nach Wahl der Größe des Ausschnitts 22, die Anzeige dieses Ausschnitts 22 für den Fahrer blockiert werden kann. Besonders bevorzugt kann die Anzeigevorrichtung 12 dazu ausgebildet sein, diejenigen Segmente 18 zu bestimmen, die den Ausschnitt 22 des Flüssigkristallbildschirms ergeben und die die bewegte Unterhaltungsanzeige anzeigen, um diese automatisiert für den Fahrer zu sperren. Insbesondere kann so auch nach einer Größenanpassung des Ausschnitts 22, die Blickschutzeinrichtung 20 variabel angesteuert werden, so dass nur die bewegte Unterhaltungsanzeige gesperrt wird und der Rest der Anzeigevorrichtung weiterhin für den Fahrer sichtbar bleibt.

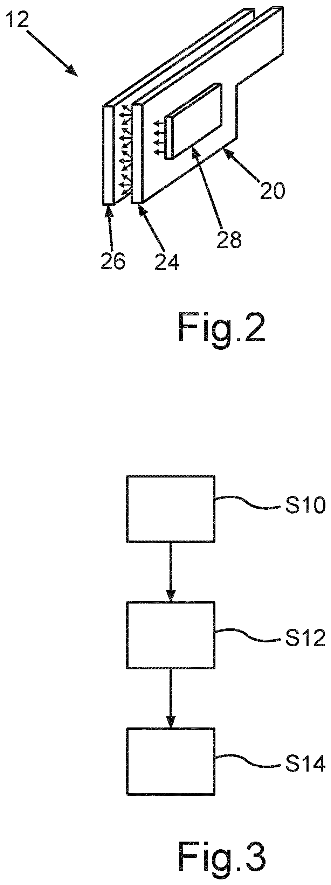

In Fig. 2 ist eine weitere beispielhafte Alternative zur Realisierung der Blickschutzeinrichtung 20 dargestellt. In dieser Ausführungsform kann die Anzeigevorrichtung 12 eine zweischichtige Hintergrundbeleuchtung aufweisen, vor der die Flüssigkristallanzeigeschicht 26 angeordnet ist. Eine erste Hintergrundbeleuchtungsschicht 24 kann wie eine normale Hintergrundbeleuchtung eines Flüssigkristallbildschirms dazu ausgebildet sein, Licht diffus abzustrahlen. Das heißt, dass das Licht von der ersten Hintergrundbeleuchtungsschicht in alle Raumrichtungen abgestrahlt werden kann. Eine zweite Hintergrundbeleuchtungsschicht 28 kann dazu ausgebildet sein, Licht kollimiert in Blickrichtung der Beifahrerposition 14 abzustrahlen. Um das Licht der zweiten Hintergrundbeleuchtungsschicht 28 zu kollimieren, kann eine Kollimatorvorrichtung (nicht gezeigt) bereitgestellt sein, die beispielsweise nach einer Lichtquelle eine Lochblende aufweist und zusätzlich eine Sammellinse, deren Fokuspunkt in dem Loch der Lochblende liegt. Vorzugsweise kann auch ein LCF (Light Control Film) als Kollimatorvorrichtung verwendet werden. Somit können Lichtstrahlen von der Lichtquelle parallelisiert und in eine vorgegebene Richtung gelenkt werden.

Um mit dieser Ausführungsform einen Zustand für ein jeweiliges Segment 18 zu wechseln, kann vorgesehen sein, dass in den Bereichen die aus der Fahrerposition 16 gesehen werden sollen, nur die erste Hintergrundbeleuchtungsschicht 24 aktiviert ist und die zweite Hintergrundbeleuchtungsschicht 28 kann für diesen Bereich deaktiviert sein. In den Segmenten, in dem die Anzeige für die Fahrerposition 16 blockiert werden sollen, kann nur die zweite Hintergrundbeleuchtungsschicht 28 Licht abstrahlen und die erste Hintergrundbeleuchtungsschicht 24 kann für diesen Bereich deaktiviert sein. Somit wird das Licht nur zu der Beifahrerposition 14 abgestrahlt und eine Anzeige für einen Fahrer in diesem Segment ist dunkel.

In Fig. 3 ist ein beispielhaftes Verfahrensdiagram zum Aktivieren einer Blickschutzeinrichtung 20 für ein Kraftfahrzeug 10 dargestellt. In einem Schritt S10 kann zunächst bestimmt werden, ob das Kraftfahrzeug 10 in einem manuellen Fahrbetrieb gefahren wird. Das heißt, es kann geprüft werden, ob ein Fahrer selber das Kraftfahrzeug steuert oder ob eine Computereinrichtung des Kraftfahrzeugs 10 einen autonomen Fahrbetrieb durchführt. In einem Schritt S12 können dann Segmente 18 der Anzeigevorrichtung 12 bestimmt werden, auf denen eine bewegte Unterhaltungsanzeige angezeigt wird. So kann eine Position der Unterhaltungsanzeige auf dem Flüssigkristallbildschirm durch die Anzeigevorrichtung 12 bestimmt werden.

In einem Schritt S14 kann dann die Blickschutzeinrichtung 20 für diejenigen Segmente 18 aktiviert werden, in denen die bewegte Unterhaltungsanzeige festgestellt wurde, falls bestimmt wurde, dass das Kraftfahrzeug 10 in dem manuellen Fahrbetrieb gefahren wird.

In einer weiteren beispielhaften Ausführungsform besteht ein Aspekt darin, dass der Bildschirm auf der Beifahrerseite 14 des Fahrzeugs 10 partiell in einen privacy Modus geschalten werden kann. Das heißt, der Bildschirm kann in Bereiche (Segmente 18) unterteilt sein, in denen eine Anzeige aus Richtung einer Fahrerseite (Fahrerposition 16) eingeschränkt werden kann, damit dieser Bereich von einem Fahrer nicht mehr eingesehen werden kann (privacy Modus).

Eine Schaltung des privacy Modus kann in einem vorher festgelegten Bereich des LC-Displays erfolgen oder auch in mehreren Zonen erfolgen. Diese Zonen können zum Beispiel mittels mehrerer LC-Zellen, welche zwischen einem backlight (Hintergrundbeleuchtung 24) und dem LCD (Flüssigkristallanzeigeschicht 26) angeordnet sind.

Hierdurch muss nicht der gesamte Bildschirm im Beifahrerbereich für den Fahrer schwarz geschalten werden. Alle nicht bewegten Inhalte wie zum Beispiel Statuszeilen, Bedienelemente, Uhrzeit, Informationen und so weiter können sowohl vom Beifahrer als auch vom Fahrer gesehen werden. Damit bleibt der optische Gesamteindruck der Schalttafel besser erhalten und große schwarze Flächen werden vermieden.

Um das zu erreichen, kann der Bildschirm eine Technologie umfassen, die eine Richtung des sichtbaren Lichts des Displays steuern kann. Diese Lichtausrichtung ist vorzugsweise schaltbar. Dabei können zwei Zustände unterstützt werden. Zum einen ein "public Modus" in dem der Displayinhalt aus einem großen Winkel sichtbar ist. Sowohl der Fahrer als auch der Beifahrer kann in diesem Modus einen Inhalt auf dem Bildschirm sehen. Zum anderen ein "privacy Modus" in dem das Licht des Displays gerichtet und in einem engen Winkel senkrecht zur Displayfläche abgestrahlt wird. Der Inhalt des Bildschirms ist nur vom Beifahrer zu sehen. In Richtung des Fahrers wird kein beziehungsweise wenig Licht abgestrahlt, wodurch der Inhalt sehr stark abgedunkelt ist.

Vorzugsweise wird das Display in Segmente 18 eingeteilt. Davon können einzelne Segmente 18 in den privacy Modus geschaltet werden, während andere Segmente 18 weiterhin den public Modus anzeigen. Im bevorzugten Fall ist ein größerer Bereich des Displays immer im public Modus und nur ein Teilbereich befindet sich in dem privacy Modus.

Eine technische Lösung kann mit LC-Zellen (liquid cristal) erfolgen, welche speziell für die Richtung des Lichts eingesetzt werden. Als LC-Zellen oder als LC-Zellenstack kann beispielsweise eine oder mehrere geschichtete TN-Zellen (twisted nematic) eingesetzt werden. Die LC-Zellen können beispielsweise als ganzflächige Segmente ausgebildet sein die waagerecht und/oder senkrecht angeordnet sind oder die LC-Zellen können ebenfalls eine andere geometrische Form besitzen, zum Beispiel eine Rautenform oder eine Rechtecksform.

Eine weitere mögliche Umsetzung erfolgt mit einem zweischichtigen backlight 24, welches partiell oder in Segmenten 18 in den privacy Modus geschalten werden kann.

Insgesamt zeigen die Beispiele, wie durch die Erfindung eine partielle privacy Schaltung bei Displays bereitgestellt werden kann.

## Patentansprüche

1. Kraftfahrzeug (10) mit einer Anzeigevorrichtung (12), die an einem Armaturenbrett des Kraftfahrzeugs (10) angeordnet ist, wobei die Anzeigevorrichtung (12) einen Flüssigkristallbildschirm aufweist, der zumindest einer Beifahrerposition (14) zugeordnet ist, wobei der Flüssigkristallbildschirm in eine Mehrzahl von Segmenten (18) unterteilt ist, wobei ein jeweiliges Segment (18) eine elektronisch schaltbare Blickschutzeinrichtung (20) aufweist, die dazu ausgebildet ist, in einem aktivierten Zustand eine Anzeige eines Anzeigebilds der jeweiligen Segmente (18) aus Blickrichtung einer Fahrerposition (16) zu blockieren und die Anzeige aus Blickrichtung der Beifahrerposition (14) zuzulassen, und in einem deaktivierten Zustand die Anzeige aus beiden Blickrichtungen zuzulassen, wobei die Anzeigevorrichtung (12) dazu ausgebildet ist, die Segmente (18) zu bestimmen, auf denen eine bewegte Unterhaltungsanzeige angezeigt wird, und für diese Segmente (18) die Blickschutzeinrichtung (20) zu aktivieren, wobei der Flüssigkristallbildschirm zusätzlich zu einer Flüssigkristallanzeigeschicht (26) zumindest eine Flüssigkristallzellenschicht, die als eine **TN-**Zellenschicht ausgebildet ist, als Blickschutzeinrichtung (20) aufweist, die segmentweise ansteuerbar ist und die dazu ausgebildet sind, bei angelegter Spannung Lichtstrahlen in Blickrichtung der Beifahrerposition (14) zu kollimieren,
wobei die Flüssigkristallzellenschicht so schaltbar ist, dass eine gitterförmige Struktur in der Flüssigkristallzellenschicht entsteht, so dass die TN-Zellenschicht eine für Licht undurchsichtige Schicht mit einzelnen durchsichtig geschalteten Löchern in der TN-Zellenschicht ist, wobei durch die Löcher nur parallele Strahlen hindurchtreten und seitliche Strahlen größtenteils herausgefiltert werden.

2. Kraftfahrzeug (10) nach Anspruch 1, wobei die zumindest eine Flüssigkristallzellenschicht zwischen einer Hintergrundbeleuchtung (24) des Flüssigkristallbildschirms und der Flüssigkristallanzeigeschicht (26) des Flüssigkristallbildschirms oder an einer Oberfläche des Flüssigkristallbildschirms angeordnet ist.

3. Kraftfahrzeug (10) nach einem der vorhergehenden Ansprüche, wobei mehrere hintereinander angeordnete und zueinander ausgerichtete Flüssigkristallzellenschichten als jeweilige Blickschutzeinrichtung (20) bereitgestellt sind.

4. Kraftfahrzeug (10) nach einem der vorhergehenden Ansprüche, wobei die Segmente (18) als waagerechte und/oder senkrechte Streifen ausgebildet sind.

5. Kraftfahrzeug (10) nach einem der Ansprüche 1 bis 3, wobei die Segmente (18) als Rechtecke und/oder Rauten ausgebildet sind.

6. Kraftfahrzeug (10) nach einem der vorhergehenden Ansprüche, wobei die Anzeigevorrichtung (12) dazu ausgebildet ist, zu bestimmen, ob das Kraftfahrzeug (10) sich bewegt oder steht und/oder ob das Kraftfahrzeug (10) manuell oder autonom betrieben wird, und die Blickschutzeinrichtung (20) zu aktivieren, falls das Kraftfahrzeug (10) sich bewegt und/oder manuell betrieben wird, und die Blickschutzeinrichtung (20) zu deaktivieren, falls das Kraftfahrzeug (10) steht und/oder autonom betrieben wird.

7. Verfahren zum Aktivieren einer Blickschutzeinrichtung (20) mit einem Kraftfahrzeug (10) nach einem der vorhergehenden Ansprüche, wobei das Verfahren die folgenden Schritte umfasst:
- Bestimmen (S10), ob das Kraftfahrzeug (10) in einem manuellen Fahrbetrieb gefahren wird;
- Bestimmen (S12) von Segmenten (18) der Anzeigevorrichtung (12), auf denen eine bewegte Unterhaltungsanzeige angezeigt wird;
- Aktivieren (S14) der Blickschutzeinrichtung (20) in den Segmenten (18), in denen die bewegte Unterhaltungsanzeige angezeigt wird, falls das Kraftfahrzeug (10) in dem manuellen Fahrbetrieb gefahren wird.

## Claims

1. A motor vehicle (10) having a display apparatus (12) that is situated on a dashboard of the motor vehicle (10), the display apparatus (12) having a liquid crystal display that is associated with at least one front seat passenger position (14), the liquid crystal display being subdivided into a plurality of segments (18), wherein each segment (18) has an electronically switchable view protection device (20) that is designed, in an activated state, to block a display image of the particular segments (18) from being displayed in the viewing direction of a driver position (16) and to allow it to be displayed in the viewing direction of the front seat passenger position (14), and in a deactivated state, to allow it to be displayed in both viewing directions, wherein the display apparatus (12) is designed to determine the segments (18) on which a moving entertainment display is being displayed and to activate the view protection device (20) for these segments (18), wherein in addition to a liquid crystal display layer (26) the liquid crystal display additionally has at least one liquid crystal cell layer, designed as a TN cell layer, as a view protection device (20), which is activatable segment by segment and is designed to collimate light beams in the viewing direction of the front passenger position (14) when voltage is applied;
wherein the liquid crystal cell layer is switchable in such a way that a gridded structure in the liquid crystal cell layer results, so that the TN cell layer is a layer that is opaque to light, with individual holes in the TN cell layer that are switched to be transparent, wherein as a result of the holes, only parallel beams pass through and lateral beams are for the most part filtered out.

2. The motor vehicle (10) according to claim 1, wherein the at least one liquid crystal cell layer is situated between a backlight (24) of the liquid crystal display and the liquid crystal display layer (26) of the liquid crystal display, or at a surface of the liquid crystal display.

3. The motor vehicle (10) according to one of the preceding claims, wherein multiple liquid crystal cell layers situated one behind the other and aligned with one another are provided as the respective view protection device (20).

4. The motor vehicle (10) according to one of the preceding claims, wherein the segments (18) are designed as horizontal and/or vertical strips.

5. The motor vehicle (10) according to one of claims 1 through 3, wherein the segments (18) are designed as rectangles and/or rhomboids.

6. The motor vehicle (10) according to one of the preceding claims, wherein the display apparatus (12) is designed to determine whether the motor vehicle (10) is moving or is stationary, and/or whether the motor vehicle (10) is being operated manually or autonomously, and to activate the view protection device (20) if the motor vehicle (10) is moving and/or is operated manually, and to deactivate the view protection device (20) if the motor vehicle (10) is stationary and/or is being operated autonomously.

7. A method for activating a view protection device (20), with a motor vehicle (10) according to one of the preceding claims, wherein the method comprises the following steps:
- determining (S10) whether the motor vehicle (10) is being driven in a manual driving operation;
- determining (S12) segments (18) of the display apparatus (12) on which a moving entertainment display is being displayed;
- activating (S14) the view protection device (20) in the segments (18) in which the moving entertainment display is being displayed, if the motor vehicle (10) is being driven in the manual driving operation.

## Revendications

1. Véhicule automobile (10) comprenant un dispositif d'affichage (12) disposé sur un tableau de bord du véhicule automobile (10), le dispositif d'affichage (12) comportant un écran à cristaux liquides destiné à être vu depuis au moins une position passager (14), l'écran à cristaux liquides étant divisé en une pluralité de segments (18), chaque segment (18) comportant un dispositif de protection visuelle (20) commutable électroniquement, conçu pour, dans un état activé, bloquer l'affichage d'une image affichée par les segments respectifs (18) depuis la direction de vision d'une position conducteur (16) et permettre l'affichage depuis la direction de vision de la position passager (14), et dans un état désactivé, permettre l'affichage depuis les deux directions de vision, le dispositif d'affichage (12) étant conçu pour déterminer les segments (18) sur lesquels un affichage de divertissement animé est affiché et pour activer le dispositif de protection visuelle (20) pour ces segments (18), l'écran à cristaux liquides comportant, en plus d'une couche d'affichage à cristaux liquides (26), au moins une couche de cellules à cristaux liquides formée comme une couche de cellules TN, constituant le dispositif de protection visuelle (20), laquelle peut être commandée par segments et est conçue pour collimater les rayons lumineux dans la direction de vision de la position passager (14) ;
la couche de cellules à cristaux liquides étant commutable de telle sorte qu'une structure en forme de grille se forme dans la couche de cellules à cristaux liquides, de sorte que la couche de cellules TN constitue une couche opaque à la lumière comportant des ouvertures individuelles rendues transparentes, seuls des rayons lumineux parallèles traversant les ouvertures et les rayons latéraux étant en grande partie filtrés.

2. Véhicule automobile (10) selon la revendication 1, dans lequel la au moins une couche de cellules à cristaux liquides est disposée entre un rétroéclairage (24) de l'écran à cristaux liquides et la couche d'affichage à cristaux liquides (26) de l'écran à cristaux liquides ou sur une surface de l'écran à cristaux liquides.

3. Véhicule automobile (10) selon l'une des revendications précédentes, dans lequel plusieurs couches de cellules à cristaux liquides disposées les unes derrière les autres et alignées les unes par rapport aux autres sont prévues comme dispositifs de protection visuelle (20) respectifs.

4. Véhicule automobile (10) selon l'une des revendications précédentes, dans lequel les segments (18) sont formés en bandes horizontales et/ou verticales.

5. Véhicule automobile (10) selon l'une des revendications 1 à 3, dans lequel les segments (18) sont formés en rectangles et/ou en losanges.

6. Véhicule automobile (10) selon l'une des revendications précédentes, dans lequel le dispositif d'affichage (12) est conçu pour déterminer si le véhicule automobile (10) est en mouvement ou à l'arrêt et/ou si le véhicule automobile (10) est conduit manuellement ou de manière autonome, et d'activer le dispositif de protection visuelle (20) si le véhicule automobile (10) est en mouvement et/ou est conduit manuellement, et de désactiver le dispositif de protection visuelle (20) si le véhicule automobile (10) est à l'arrêt et/ou est conduit de manière autonome.

7. Procédé d'activation d'un dispositif de protection visuelle (20), mis en œuvre avec un véhicule automobile (10) selon l'une des revendications précédentes, le procédé comprenant les étapes suivantes :
- déterminer (S10) si le véhicule automobile (10) est conduit en mode de conduite manuel ;
- déterminer (S12) les segments (18) du dispositif d'affichage (12) sur lesquels un affichage de divertissement animé est affiché ;
- activer (S14) le dispositif de protection visuelle (20) dans les segments (18) sur lesquels l'affichage de divertissement animé est affiché, lorsque le véhicule automobile (10) est conduit en mode de conduite manuel.
